# EUROPEAN PATENT SPECIFICATION

(11) **EP 2 765 061 B1**
(45) Date of publication and mention of the grant of the patent: **11.01.2017**
(21) Application number: 13150928.3
(22) Date of filing: 11.01.2013
(51) Int. Cl.: B62D 5/30

(54) **Hydraulic pump system of an emergency hydraulic power steering**
Hydraulisches Pumpensystem eines hydraulischen Notservolenkung
Système de pumpe hydraulique d'une direction assitée d'urgence

(43) Date of publication of application: 13.08.2014
(73) Proprietor: Astra Veicoli Industriali S.p.A., 29100 Piacenza (IT)
(72) Inventor: Benetti, Antonio, 25010 SAN ZENO NAVIGLIO (IT); Franco, Gianluigi, 10126 TORINO (IT); Malvano, Massimo, 10126 TORINO (IT); Moratti, Stefano, 29010 CADEO (IT)
(74) Representative: Franzolin, Luigi

(56) References cited:
- US-A- 3 407 894

## Description

### Application field of the invention

The present invention refers to the field of hydraulic pump systems, of an emergency hydraulic power steering. Emergency pumps are compulsory on certain industrial vehicles. US3407894 shows an auxiliary hydraulic pump splined on a propelled shaft. The features of such implementation are described in the preamble of claim 1.

### Description of the prior art

Industrial vehicles are generally equipped with an emergency hydraulic gear pump which takes the place of the main hydraulic pump in case of malfunctioning of the latter.

The main hydraulic pump, of the gear type, is closed in its own case. It has a shaft, only one end of which being accessible from the outside of the case, such end being connected to the thermal engine of the vehicle, from which it takes its motion.

In case the engine is stopped while the vehicle is moving, the main hydraulic pump would not be able to provide pressurized oil to the hydraulic power steering, thus an emergency pump is provided, above all for heavy vehicles. It has similar characteristics to the main pump, but instead of taking its motion from the engine, it takes it directly from the driveline, namely from the transmission, so that even though the engine is stopped and the vehicle is moving, the pump is activated.

In general, such pump, of the gear type, can have no case and it can be inserted directly in the gearbox. Its own drive shaft is arranged parallel to the output shaft of the gearbox and it takes from the latter its motion by means of one or more gearings.

Within the gearbox, the output shaft may comprise a fuse part, namely a part suitable to break in case of engine seizure, in order to prevent a wheel blocking that will make the vehicle uncontrollable.

Due to the kinematic connection to the gearbox gearings, the pump is connected to the output shaft upstream of the fuse part, thus, if the fuse pump breaks, the emergency pump would be as isolated as the main pump. Thus the hydraulic power steering will not work anyway.

In addition, some gearboxes, although they have all the mechanical and functional characteristics to be installed on determinate vehicles, cannot be used, since they are not equipped with an emergency hydraulic pump of the hydraulic power steering.

Another problem comes from the fact that, when the gearbox comprises the internal housing for the hydraulic power steering pump, the respective bell housing containing the gearbox gearings is bigger.

In some circumstances, for example for vehicles having a too short wheel base, a pre-existing gearbox integrating the emergency pump cannot be installed, and thus it is necessary to redesign it.

A solution is also known in the art, according to which the case of the pump is firmly attached to the vehicle frame, outside the gearbox, and the drive shaft of the pump is arranged parallel to a propeller shaft and is connected to the latter by means of gearings. Such solution is not always practicable, since a predetermined space is necessary for housing the pump and the control gearings between the propeller shaft and the pump drive shaft.

In addition, when the transmission gearings are of the belt and pulley type, there is also a problem of reliability of the solution, since the material of which the belt is made tends to deteriorate over time, thus, in case of need, it is not possible to exclude a simultaneous failure of the main pump and of the emergency pump.

### Summary of the invention

Therefore the aim of the present invention is to overcome all the aforementioned drawbacks and to provide a hydraulic pump system of an emergency hydraulic power steering, which allows to overcome the problems of the prior art.

In particular by being reliable and easy to install, even where the gearbox does not have a specific housing for the emergency pump.

The object of the present invention is a hydraulic pump system, for emergency hydraulic power steering, in accordance with claim 1.

The solution described here is so versatile that it can be installed also after the definition of the vehicle layout. The object of the present invention is also a method for realizing a hydraulic pump system, for emergency hydraulic power steering.

A further object of the present invention is a ground vehicle equipped with the aforementioned system.

The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows a schematic view of the hydraulic pump system that is object of the present invention,
figures 2 - 4 show axial sections of alternative embodiments of emergency hydraulic pumps according to figure 1.

In the figures the same reference numbers and letters identify the same elements or components.

### Detailed description of preferred embodiments of the invention

According to the present invention, the hydraulic pump P, intended to be used as an emergency hydraulic pump, comprises a drive shaft having two opposite ends S1 and S2, wherein both ends are accessible from the outside of the case H of the pump P.

According to the present invention, the drive shaft of the pump S is coaxially arranged and connected with the propeller shaft MT, namely it defines a portion of the shaft transmitting the motion to the vehicle wheels.

In other words, the emergency pump is directly splined to the propeller shaft TM or its drive shaft is coaxially connected to the propeller shaft TM. This implies that the drive shaft S of the pump substantially coincides with the propeller shaft. Therefore, the drive shaft of the pump P passes through the case H of the pump.

Thus, by virtue of the present invention, such "direct" connection implies that no rotating coupling elements, such as further gears and pulleys/belt, are present to transfer the motion from the propeller shaft to the pump P.

The pump has its own distinct case separated from the gearbox bell housing and thus it is always arranged downstream of the fuse portion of the propeller shaft. Therefore, also in case of engine seizure, the pump P is always directly connected to the vehicle's wheels.

The ends S1 and S2 are preferably equipped with as many connection joints J1 and J2.

Upstream and/of downstream of the emergency pump P, articulated joints BJ may be present in order to allow an easy housing of the pump under the vehicle frame (not shown) and/or to allow the reciprocal movement between wheels V and vehicle frame, by means of the travel of the respective suspensions.

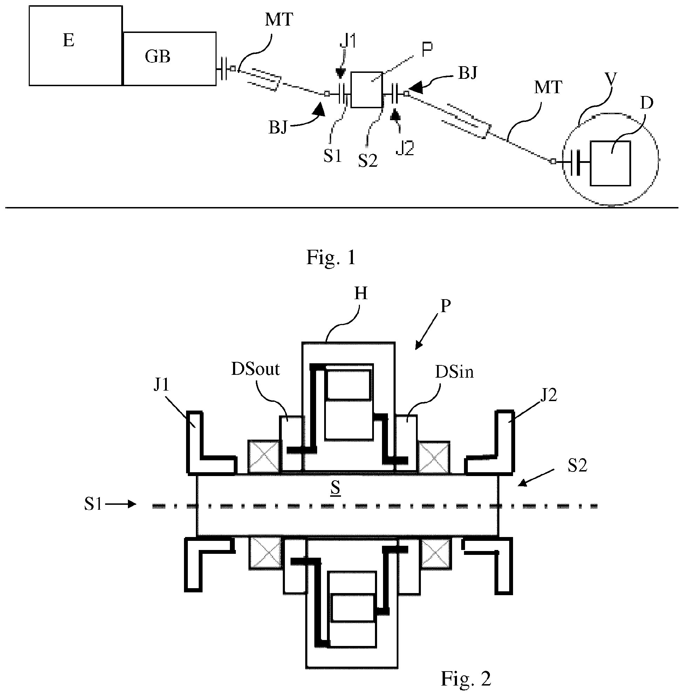

Figure 1 shows also a thermal engine E, which transmits the motion, in sequence, to the gearbox GB, to the emergency pump P, to a differential D (if present) and to the wheels V. According to a preferred alternative embodiment of the present invention, the emergency pump P is of the gear type. According to the embodiment of the invention shown with the help of figures 2-4, the emergency hydraulic pumps are of the "radial piston" type, per se known.

Such hydraulic component is generally used as a hydraulic motor installed on the driveline, preferably on the hub, also called articulated joint, of the vehicle's wheels.

According to the present invention, such components is adapted to function as a hydraulic pump instead of as a motor.

Advantageously, the radial piston pumps have the advantage to have an axial symmetry, the axis of symmetry coinciding with the drive shaft S of the pump.

Thus the pump is arranged around its drive shaft S as a torus.

This, on the one hand, reduces the installation problems of the pump itself, in terms of encumbrance; on the other hand, it allows to spine the pump directly to the propeller shaft MT of the driveline. Thus the drive shaft of the pump and the propeller shaft of the driveline are at least coaxial to each other and not only parallel to each other and they may also coincide. In the latter case, the joints J1 and J2 may be absent.

According to another aspect of the invention, the pump is provided in kit form, splined to a hub serving as a drive shaft S provided with coaxial joints J1 and J2, for a subsequent installation of vehicles having a different wheel base.

According to another aspect of the present invention, the emergency pump P, according to figure 2, has an intake distributor DSin arranged at one side of the pump and an output distributor DSout arranged at the opposite side of the pump P with respect to the drive shaft S. In such configuration, the distributors are called of the axial type, since the intake and the output direction of the oil is parallel to the axis of symmetry of the pump.

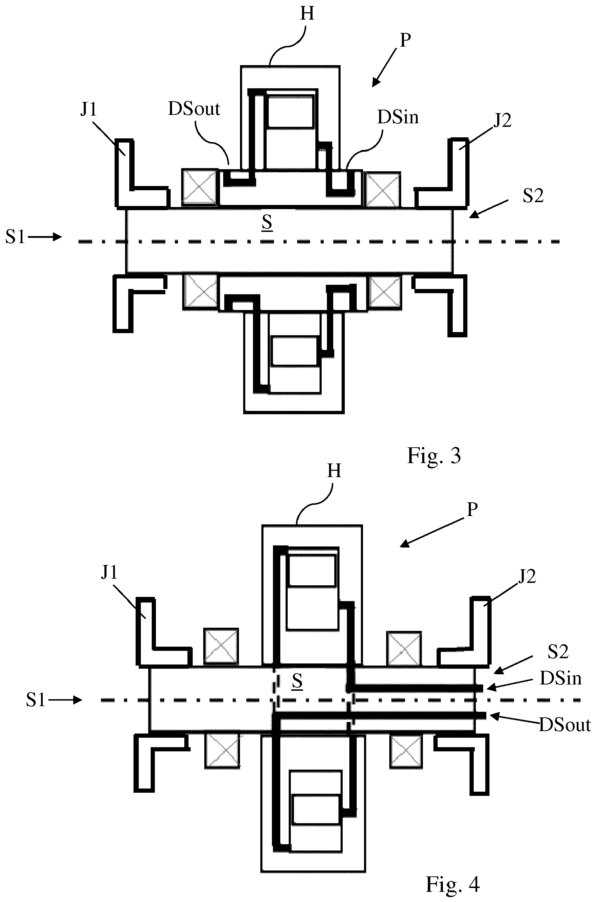

According to figure 3, the intake and output distributor are made in a single piece and are coaxially arranged with respect to the pump. In this case the intake and the output direction of the oil is radial with respect to the axis of symmetry of the pump.

According to figure 4, the distributor Ds, both the intake distributor DSin and the output distributor DSout, is integrated in the drive shaft S of the pump P.

Such solution is particularly advantageous, when the whole propeller shaft comprises hydraulic oil pipes integrated in the shaft itself. This allows to use the propeller shaft TM as an oil pipe, at least until the gearbox GB is reached, removing the external pipes that can be subject to wear or to damage.

In figure 1 the propeller shaft MT is intended to be comprised between the gearbox GB and the differential. The present invention, however, can be used also on propeller shafts between the differential D and a wheel hub V.

It will be apparent to the person skilled in the art that other alternative and equivalent embodiments of the invention can be conceived and reduced to practice without departing from the scope of the invention.

The advantages deriving from the use of this invention are evident.

From the description set forth above it will be possible for the person skilled in the art to embody the invention with no need of describing further construction details. The elements and the characteristics described in the different preferred embodiments may be combined without departing from the scope of the present application.

## Claims

1. Ground vehicle comprising
- an internal combustion engine (E),
- a gearbox (GB) receiving the motion from the internal combustion engine,
- at least a driving wheel (V) and
- a propeller shaft (MT) receiving the motion from the gearbox (GB) in order to transfer it to the at least driving wheel (V),
- an emergency hydraulic pump (P) to feed a vehicular hydraulic power steering,
the pump (P) comprising its own respective case (H) and being splined directly to a portion of said propeller shaft (MT) **characterized in that**
- said pump (p) is of the radial piston (P) type, comprising
- a distributor (DS) of the hydraulic oil, of the radial type, integrated in the drive shaft (S).

2. Method for realizing an emergency hydraulic pump for a ground vehicle according to claim 1, comprising the step of arranging a hydraulic pump having its own respective case (H) and of splining said pump directly to a propeller shaft (MT) of the vehicle, **characterized in** comprising the steps of selecting said pump of the radial piston (P) type, and in realizing the distributor (DS) of the hydraulic oil, of the radial type, integrated in the drive shaft (S).

## Patentansprüche

1. Landfahrzeug, das Folgendes umfasst:
- eine Brennkraftmaschine (E),
- ein Getriebe (GB), das die Antriebsbewegung von der Brennkraftmaschine empfängt,
- mindestens ein Antriebsrad (V) und
- eine Kardanwelle (MT), die die Antriebsbewegung von dem Getriebe (GB) empfängt, um sie an das mindestens eine Antriebsrad (V) zu übertragen,
- eine Notfall-Hydraulikpumpe (P), um eine Fahrzeug-Hydraulikservolenkung zu versorgen,
wobei die Pumpe (P) ihr jeweils eigenes Gehäuse (H) aufweist und mit einem Abschnitt der Kardanwelle (MT) direkt kerbverzahnt ist, **dadurch gekennzeichnet, dass**
- die Pumpe (P) vom Radialkolbentyp (P) ist und Folgendes umfasst:
- einen Verteiler (DS) des Hydrauliköls des Radialtyps, der in die Antriebswelle (S) eingebaut ist.

2. Verfahren zum Umsetzen einer Notfall-Hydraulikpumpe für ein Landfahrzeug nach Anspruch 1, das den Schritt des Anordnens einer Hydraulikpumpe, die ihr jeweils eigenes Gehäuse (H) besitzt, und des direkten Kerbverzahnens der Pumpe mit einer Kardanwelle (MT) des Fahrzeugs umfasst, **dadurch gekennzeichnet, dass** es die Schritte des Auswählens der Pumpe des Radialkolbentyps (P) umfasst, und durch Verwirklichen des Verteilers (DS) des Hydrauliköls vom Radialtyp, der in die Antriebswelle (S) eingebaut ist.

## Revendications

1. Véhicule terrestre comprenant :
- un moteur à combustion interne (E),
- une boîte de vitesses (GB) qui reçoit le mouvement en provenance du moteur à combustion interne,
- au moins une roue motrice (V) et
- un arbre de transmission (MT) qui reçoit le mouvement en provenance de la boîte de vitesses (GB) afin de le transférer à l'au moins une roue motrice (V),
- une pompe hydraulique d'urgence (P) afin d'alimenter une direction assistée hydraulique de véhicule,
la pompe (P) comprenant son propre carter respectif (H) et étant directement fixée par cannelure à une partie dudit arbre de transmission (MT),
**caractérisé en ce que** :
- ladite pompe (P) est du type à piston radial (P), comprenant :
- un distributeur (DS) du liquide hydraulique, du type radial, intégré dans l'arbre d'entraînement (S).

2. Procédé pour réaliser une pompe hydraulique d'urgence pour un véhicule terrestre selon la revendication 1, comprenant l'étape consistant à agencer une pompe hydraulique comportant son propre carter respectif (H) et à fixer par cannelure ladite pompe directement à un arbre de transmission (MT) du véhicule,
**caractérisé en ce qu'**il comprend les étapes consistant à sélectionner ladite pompe du type à piston radial (P) et à réaliser le distributeur (DS) du liquide hydraulique, du type radial, de telle sorte qu'il soit intégré dans l'arbre d'entraînement (S).
